# EUROPÄISCHE PATENTSCHRIFT

(11) **EP 3 884 533 B1**
(45) Veröffentlichungstag und Bekanntmachung des Hinweises auf die Patenterteilung: **02.12.2026**
(21) Anmeldenummer: 19787133.8
(22) Anmeldetag: 03.10.2019
(51) Int. Cl.: H01M 50/213, H01M 50/503, H01M 50/516, H01M 50/517, H01M 50/204

(54) **KONTAKTIERUNGSVORRICHTUNG**
CONTACTING DEVICE
DISPOSITIF DE CONTACT

(30) Priorität: 19.11.2018 AT 510112018
(43) Veröffentlichungstag der Anmeldung: 29.09.2021
(73) Patentinhaber: John Deere Electric Powertrain LLC, Moline, IL 61265 (US)
(72) Erfinder: DREXLER, Florian, 4240 Freistadt (AT); ZUCKER, Andreas, 4240 Freistadt (AT)
(74) Vertreter: Hübscher & Partner Patentanwälte GmbH
(86) Internationale Anmeldenummer: PCT/AT2019/060324
(87) Internationale Veröffentlichungsnummer: WO 2020/102833

(56) Entgegenhaltungen:
- DE-A1- 102014 212 143
- US-A1- 2010 105 239

## Beschreibung

### Technisches Gebiet

Die Erfindung bezieht sich auf eine Kontaktierungsvorrichtung zum lösbaren elektrischen und mechanischen Verbinden einer Batteriezelle mit einem, zwei voneinander elektrisch isolierte Strompfade aufweisenden Träger.

### Stand der Technik

Um insbesondere im Zusammenhang mit Batteriemodulen für den Elektromobilbereich einen einfachen Assembliervorgang von zu einem Modul zusammengesetzten Batteriezellen sicherzustellen, sind aus dem Stand der Technik Kontaktierungsvorrichtungen für Batteriemodule zum lösbaren elektrischen und mechanischen Verbinden einer Batteriezelle mit einem, Strompfade für die Batteriezelle aufweisenden Träger bekannt (US 20180287108 A1). Die Kontaktierungsvorrichtung weist dabei einen Endabschnitt der Batteriezelle umfangsseitig umgreifende und mit einem ersten Strompfad verbundene Rastelemente als Massekontakt auf. Die Rastelemente greifen so in eine im Bereich einer vorpräparierten Endabschnittsbördelung der Batteriezelle vorgesehene Rastausnehmung ein, dass die verbundene Batteriezelle in ihrer Position festgehalten wird. Zur Kontaktierung des positiven Batteriezellenpols kann zudem eine Spiralfeder vorgesehen sein, die einen zweiten Strompfad des Trägers mit dem auf demselben Endabschnitt wie die Bördelung angeordneten, positiven Zellenpol elektrisch verbindet. Nachteilig ist an derartigen Kontaktierungsvorrichtungen allerdings, dass die eingesetzten Batteriezellen eine ausreichend tiefe, umlaufende Endabschnittsbördelung aufweisen müssen, um eine sichere Verbindung zwischen der Batteriezelle und dem Träger herzustellen und dass darüber hinaus aus der Batteriezelle im Fehlerfall austretendes Heißgas nur unzureichend von der betroffenen Batteriezelle abgeleitet werden kann. Weiterer relevanter Stand der Technik findet sich in DE 10 2014 212143 A1 und US 2010/105239 A1.

### Darstellung der Erfindung

Der Erfindung liegt somit die Aufgabe zugrunde, eine Kontaktierungsvorrichtung der eingangs geschilderten Art so auszugestalten, dass eine Kontaktierung weitgehend unabhängig von der Batteriezellengeometrie erfolgen kann, ohne dass dadurch der Assemblier- oder Tauschvorgang einer Batteriezelle erschwert wird. Die Erfindung löst die gestellte Aufgabe dadurch, dass eine erste, mit der Batteriezelle zugfest verbundene und den Träger bei verbundener Batteriezelle wenigstens teilweise durchsetzende Kontaktfeder einen Rastkörper bildet, der mit einer, einen elektrischen Kontakt für den ersten Strompfad aufweisenden Rastaufnahme des Trägers zusammenwirkt, und dass eine zweite Kontaktfeder einen Anschlag für die mit dem Träger verbundene Batteriezelle bildet, dadurch gekennzeichnet, dass die zweite Kontaktfeder einen Klemmabschnitt zum umfangsseitigen Umgreifen eines Endabschnittes der Batteriezelle aufweist.

Zufolge dieser Maßnahmen kann eine Kontaktierung der Batteriezelle unabhängig von ihrer Fertigungsgeometrie erfolgen, weil lediglich eine Kontaktfeder zugfest mit der Batteriezelle unter elektrischer Kontaktierung mit einem Zellenpol verbunden werden muss, während die zweite Kontaktfeder lediglich einen Anschlag für die Batteriezelle bildet. Dies bedeutet, dass bei einem Verbinden einer Batteriezelle mit dem Träger zunächst die erste Kontaktfeder in die Einführöffnung des Trägers soweit eingesetzt wird, bis die zugfest mit dieser ersten Kontaktfeder verbundene Batteriezelle gegen die zweite Kontaktfeder anschlägt. Daraufhin kann die Batteriezelle gegen die Federkraft der zweiten Kontaktfeder noch weiter in Einführrichtung bewegt werden, bis der Rastkörper der ersten Kontaktfeder in die Rastaufnahme des Trägers eingreift, womit die Batteriezelle bezüglich der Einführachse unter Vorspannung festgelegt ist. Zum Trennen der Batteriezelle vom Träger muss lediglich die Rastverbindung zwischen der ersten Kontaktfeder und dem Träger gelöst werden, wonach die erste Kontaktfeder aus der Einführöffnung ausgezogen und damit die mit dieser zugfest verbundene Batteriezelle frei entnehmbar ist. Obwohl grundsätzlich unterschiedliche Ausgestaltungen der ersten Kontaktfeder möglich sind, ergeben sich besonders vorteilhafte Konstruktionsbedingungen, wenn die erste Kontaktfeder eine Basis mit zwei oder mehreren von der Basis V-förmig aufragende Federzungen umfasst, die an ihren der Basis gegenüberliegenden Endabschnitten wenigstens abschnittsweise elektrisch leitende Rastkörper bilden. Unabhängig von der Ausgestaltung der ersten Kontaktfeder versteht es sich für den Fachmann, dass diese erste Kontaktfeder ein oder mehrere Rastkörper bilden kann, die mit ein oder mehreren Rastaufnahmen des Trägers zusammenwirken. Unter einer zugfesten Verbindung zwischen der Batteriezelle und der ersten Kontaktfeder wird grundsätzlich jede Verbindung verstanden, die in Einführrichtung nicht lösbar ist. In besonders vorteilhafter Weise kann zu diesem Zweck eine stoffschlüssige Verbindung der Kontaktfeder mit einem Zellenpol hergestellt werden, wobei grundsätzlich auch andere Verbindungsmöglichkeiten in Betracht kommen.

Um im Fehlerfall aus der Batteriezelle austretendes Heißgas ableiten zu können, kann die die erste Kontaktfeder bei verbundener Batteriezelle einen sich von einer einführseitigen ersten Außenfläche zu einer gegenüberliegenden zweiten Außenfläche des Trägers erstreckenden Führungskanal teilweise durchsetzen. Dies hat den Vorteil, dass nicht nur das austretende Heißgas über den Führungskanal abgeleitet werden kann, sondern auch, dass die im Führungskanal verlaufende erste Kontaktfeder vom austretenden Heißgas angeströmt wird und damit das Auslösen einer gegebenenfalls in dieser ersten Kontaktfeder vorgesehenen Schmelzsicherung begünstigt wird. Darüber hinaus ergibt sich auf diese Weise eine einfache Fertigung des Trägers, weil dieser lediglich eine Bohrung als Führungskanal aufweisen kann. Sofern der erste Strompfad innerhalb des Trägers verläuft, kann die Rastaufnahme des Trägers innerhalb des Führungskanals angeordnet werden.

Besonders einfache Konstruktionsbedingungen ergeben sich allerdings, wenn die beiden Strompfade auf den gegenüberliegenden Außenflächen des Trägers verlaufen, wobei bei verbundener Batteriezelle der Rastkörper der ersten Kontaktfeder den Führungskanal austrittsseitig hintergreift und mit seinem elektrisch leitenden Abschnitt als elektrischen Kontakt auf dem der Einführseite gegenüberliegenden ersten Strompfad aufliegt. Die beiden Strompfade können dabei gesonderte Leiterplatten darstellen oder aber einstückig mit dem Träger verbunden sein, so lange zwischen diesen lediglich eine ausreichende elektrische Isolierung, beispielsweise durch das Trägermaterial selbst, vorgesehen ist. Die erste Kontaktfeder kann in diesem Zusammenhang so ausgebildet sein, dass die Rastkörper zum Einführen in die Einführöffnung gegen die Kraft einer Rückstellfeder bezüglich der Einführöffnung radial nach innen verlagert werden müssen, um dann beim Austritt aus der Austrittsöffnung des Führungskanals wieder radial nach außen verlagert zu werden und damit den Führungskanal austrittsseitig radial zu hintergreifen. Daraus ergibt sich, dass in besonders einfacher Weise bei einem auf der austrittsseitigen Außenfläche des Trägers verlaufenden ersten Strompfad der diesem Strompfad zugewandte Abschnitt des jeweiligen Rastkörpers einen elektrischen Kontakt zum Verbinden des an die erste Kontaktfeder angeschlossenen Zellenpols mit dem ersten Strompfad aufweisen kann. Bei einer wie oben beschriebenen Ausgestaltung der ersten Kontaktfeder mit von einer Basis aufragenden Federzungen können die auf den Federzungen angeordneten Rastkörper mit konstruktiv besonders einfachen Mitteln in radialer Richtung durch die Federzungen federbelastet werden, sodass die Federzungen selbst Rückstellfedern für die Rastkörper bilden.

Damit die erste Kontaktfeder mechanisch stabiler ausgeführt werden und damit die zum Festlegen der Batteriezelle bezüglich des Trägers erforderlichen Kräfte aufnehmen kann, wird vorgeschlagen, dass der elektrische Kontakt der Rastaufnahme für den ersten Strompfad eine Stromleitbrücke als Schmelzsicherung aufweist. Zufolge dieser Maßnahme muss in der ersten Kontaktfeder keine Schmelzsicherung zur Absicherung der Batteriezelle vorgesehen werden, sodass diese einen gleichbleibend großen Querschnitt aufweisen kann. Beispielsweise kann der elektrische Kontakt der Rastaufnahme ein an den Führungskanal anschließender, den Führungskanal umschließender Ring sein, der über eine Stromleitbrücke als Schmelzsicherung mit dem ersten Strompfad elektrisch verbunden ist. Für den Fall eines an einer Außenfläche des Trägers verlaufenden ersten Strompfades ergibt sich somit ein die Austrittsöffnung des Führungskanals umschließender Ring, auf dem die Rastkörper der ersten Kontaktfeder mit ihren elektrisch leitenden Abschnitten bei eingesetzter Batteriezelle aufliegen. Dies hat den Vorteil, dass die Stromleitbrücken als Schmelzsicherungen sichtbar bleiben und visuell auf Beschädigungen überprüft werden können.

Um eine mit dem Träger verbundene Batteriezelle nicht nur in der Einführachse, das heißt entlang der Längsachse des Führungskanals, sondern auch quer dazu bezüglich des Trägers festzulegen, kann die zweite Kontaktfeder einen Klemmabschnitt zum umfangsseitigen Umgreifen eines Endabschnittes der Batteriezelle aufweisen. Es versteht sich dabei von selbst, dass die zweite Kontaktfeder zu diesem Zweck selbst gegenüber dem Träger nicht quer zur Einführachse verschiebbar sein darf, was beispielsweise durch eine stoffschlüssige Verbindung mit dem zweiten Strompfad erreicht werden kann. Neben einer räumlich definierten Lage der Batteriezelle hat der Klemmabschnitt der zweiten Batteriezelle aber auch den Vorteil einer zusätzlichen kraftschlüssigen Verbindung mit der Batteriezelle, womit eine stoffschlüssige Verbindung zwischen der zweiten Kontaktfeder und der Batteriezelle und / oder dem Träger entfallen und dadurch ein besonders einfacher Assemblier- oder Tauschvorgang der Batteriezelle durchgeführt werden kann. Der vom Klemmabschnitt der zweiten Kontaktfeder umgriffene Endabschnitt der Batteriezelle kann die negative Kontaktstelle ausbilden, beispielsweise indem im Fall von handelsüblichen zylindrischen Batteriezellen deren Mantel abisoliert wird und dadurch von der zweiten Kontaktfeder elektrisch kontaktiert werden kann.

Um trotz einer kompakten Bauweise der Kontaktierungsvorrichtung die Gefahr von Kurzschlüssen zu reduzieren und den Assembliervorgang weiter zu verbessern, kann der Träger eine Aussparung für einen Isolationskörper aufweisen, der eine von der zweiten Kontaktfeder isolierte Aufnahme für die erste Kontaktfeder bildet. Um ein einfaches Einführen der ersten Kontaktfeder in die elektrisch isolierte Aufnahme zu ermöglichen, kann der Isolationskörper einführseitig Anlaufschrägen für die Rastkörper der ersten Kontaktfeder aufweisen. Diese Anlaufschrägen verlagern die Rastkörper der ersten Kontaktfeder bei ihrem Einführen in die Aufnahme radial nach innen, sodass ein rasches automatisiertes Verbinden der Batteriezellen mit dem Träger ermöglicht wird, insbesondere dann, wenn die ersten Kontaktfedern mit den Batteriezellen stoffschlüssig verbunden sind.

Eine besonders einfache Positionierung der zweiten Kontaktfeder gegenüber dem Träger ergibt sich, wenn der Isolationskörper an seiner der Aufnahme gegenüberliegenden Außenseite eine Rastnut für die zweite Kontaktfeder aufweist. Dadurch wird nicht nur eine elektrische Isolation zwischen der ersten und der zweiten Kontaktfeder sichergestellt, sondern es kann auch eine mechanische Verbindung zwischen der zweiten Kontaktfeder und dem Isolationskörper erfolgen, der seinerseits vorzugsweise formschlüssig in die dafür vorgesehene Aussparung des Trägers eingesetzt ist. Obwohl auch andere Befestigungsmöglichkeiten für die zweite Kontaktfeder am Isolationskörper vorgesehen werden können, ergeben sich vorteilhafte Fertigungsbedingungen, wenn die zweite Kontaktfeder in die um die Außenseite des Isolationskörpers umlaufende Rastnut beispielsweise durch Crimpen eigesetzt wird und damit den Isolationskörper selbst radial umschließt. Für eine einfache elektrische Kontaktierung der zweiten Kontaktfeder mit dem zweiten Strompfad des Trägers kann die Rastnut so angeordnet sein, dass die darin eingesetzte zweite Kontaktfeder bei einem formschlüssigen Eingreifen des Isolationskörpers in die dafür vorgesehene Aussparung des Trägers an eine elektrische Kontaktstelle des zweiten Strompfades angedrückt wird.

Um eine thermische Beanspruchung des Trägers beim Ausgasen der Batteriezelle im Fehlerfall zu reduzieren, wird vorgeschlagen, dass der Isolationskörper einen oder mehrere Heißgaskanäle aufweist, die von der der Aufnahme für die erste Kontaktfeder gegenüberliegenden Außenseite des Isolationskörpers in diese Aufnahme münden. Die Heißgaskanäle können dabei vorzugsweise so ausgerichtet sein, dass deren Eintrittsöffnung im Bereich des Ausgasungsventils der Batteriezelle zu liegen kommt, also beispielsweise bei einer handelsüblichen zylindrischen Batteriezelle in dem den positiven Zellenpol ringförmig umschließenden Bereich des Zellenmantels. Aus der Batteriezelle austretendes Heißgas wird damit nicht wie üblich unterhalb des Trägers an den parallel liegenden Nachbarbatteriezellen mit der Gefahr einer Kettenreaktion, sondern nach oben durch den Träger abgeleitet, sodass eine Eskalation auch im Fehlerfall vermieden werden kann. Um den Abtransport des Heißgases zu begünstigen, können die Heißgaskanäle zur Längsachse der Aufnahme für die erste Kontaktfeder in einem Winkel von 20° bis 45° geneigt verlaufen.

Ein verbesserter Schutz des Trägers gegenüber thermischen und elektrischen Belastungen kann dadurch erreicht werden, dass die Aufnahme des Isolationskörpers den Führungskanal für die erste Kontaktfeder bildet. Dies bedeutet, dass sich die Aussparung des Trägers für den Isolationskörper von einer einführseitigen ersten Außenfläche zu einer gegenüberliegenden zweiten Außenfläche des Trägers erstreckt, wobei der Isolationskörper selbst eine Einführöffnung für die erste Kontaktfeder bildet und wobei der der Einführöffnung gegenüberliegende Strompfad des Trägers an die Austrittsöffnung des Isolationskörpers anschließt. Die Rastkörper der ersten Kontaktfeder hintergreifen damit bei mit dem Träger verbundener Batteriezelle den Führungskanal des Isolationskörpers und liegen auf dem der Einführseite gegenüberliegenden Strompfad auf. Um die Positionierung des Isolationskörpers gegenüber dem Träger zu verbessern, kann der Isolationskörper eine Positioniernut für eine Positionierfeder des Trägers aufweisen.

Die Erfindung bezieht sich auch auf ein Verfahren zum Assemblieren eines Batteriemoduls mit erfindungsgemäßen Kontaktierungsvorrichtungen. Im Zuge des Assemblierverfahrens werden zunächst die ersten Kontaktfedern jeweils mit dem positiven Zellenpol der Batteriezellen stoffschlüssig verbunden, beispielsweise indem diese miteinander verschweißt werden. Anschließend werden die zweiten Kontaktfedern in die dafür vorgesehenen Rastnuten der Isolationskörper eingesetzt, wobei sich besonders günstige Fertigungsbedingungen ergeben, wenn die Isolationskörper Spritzgussteile sind, die unter Ausbildung einer den Rastnuten entsprechenden Rastverbindung in die zweiten Kontaktfedern eingepresst werden. Die Isolationskörper werden danach mit den zweiten Kontaktfedern in entsprechende Aussparungen einer gemeinsamen Trägerplatte eingesetzt, sodass die zweiten Kontaktfedern an den zweiten Strompfad des Trägers unter elektrischer Kontaktierung angedrückt werden. Dabei können die zweiten Kontaktfedern auch vor dem Einsetzen der Isolationskörper in die Aussparungen der Trägerplatte mit dem zweiten Strompfad stoffschlüssig verbunden werden, der dann gemeinsam mit den Isolationskörpern mit der Trägerplatte verbunden wird. In einem nächsten Schritt werden die ersten Kontaktfedern, die stoffschlüssig mit den Batteriezellen verbunden sind, soweit in die Führungskanäle der Isolationskörper eingeführt, dass die Rastkörper der ersten Kontaktfedern die Führungskanäle austrittsseitig unter elektrische Kontaktierung des ersten Strompfades hintergreifen. Zufolge der so durch die Trägerplatte eingeführten Batteriezellen umgreifen die Klemmabschnitte der zweiten Kontaktfedern die trägerseitigen Endabschnitte der Batteriezellen ebenfalls unter elektrischer Kontaktierung.

### Kurze Beschreibung der Erfindung

In der Zeichnung ist der Erfindungsgegenstand beispielsweise dargestellt. Es zeigen
- Fig. 1: eine schematische Darstellung eines assemblierten Batteriemoduls mit erfindungsgemäßen Kontaktierungsvorrichtungen,
- Fig. 2: eine dem Schnitt entlang der Linie III - III entsprechende Darstellung im Ausschnitt bei nicht verbundenen Batteriezellen und
- Fig. 3: einen Schnitt entlang der Linie III - III im Ausschnitt.

### Wege zur Ausführung der Erfindung

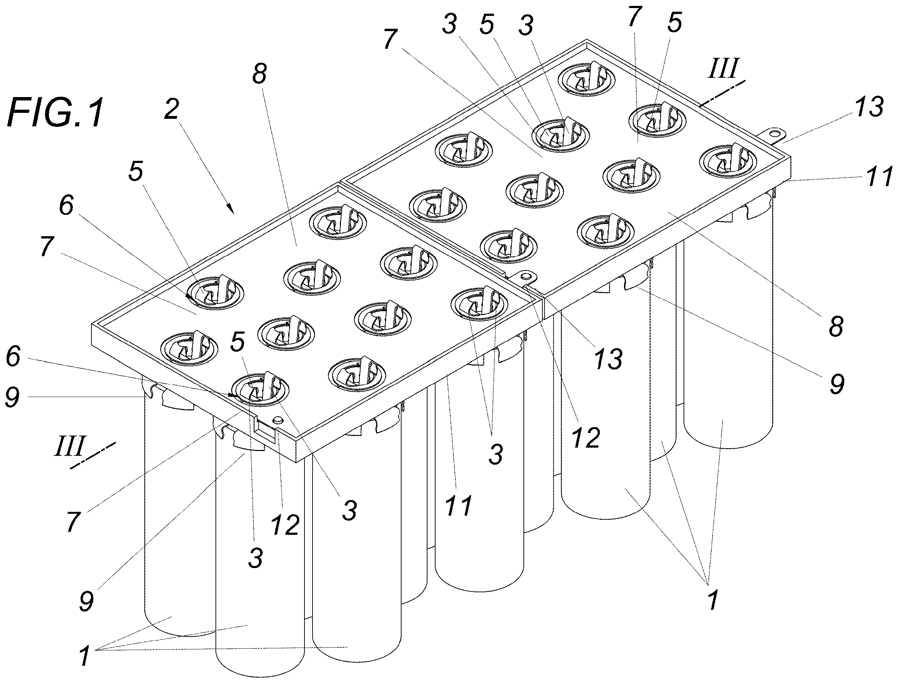

In Fig. 1 ist ein aus mehreren zylindrischen Batteriezellen 1 zusammengesetztes Batteriemodul mit mehreren erfindungsgemäßen, die Batteriezellen 1 mit einem Träger 2 verbindenden Kontaktierungsvorrichtungen zu sehen. Dabei wird der Träger von den Rastkörper 3 aufweisenden, zugfest mit den Batteriezellen 1 verbundenen ersten Kontaktfedern 4 durchsetzt und von den Rastkörpern 3 so hintergriffen, dass die Rastkörper 3 am elektrischen Kontakt 5 der Rastaufnahme 6 aufliegen. Gemäß der in der Fig. 1 dargestellten Ausführungsform ist der elektrische Kontakt 5 ringförmig ausgebildet und mit Stromleitbrücken 7 als Schmelzsicherung mit einem beispielsweise aus Kupfer gefertigten Leitblech als erstem Strompfad 8 elektrisch verbunden. Die Batteriezellen 1 werden zudem an ihren Endabschnitten von zweiten Kontaktfedern 9 umgriffen und elektrisch kontaktiert, wobei die Kontaktfedern 9 jeweils einen Anschlag für die mit dem Träger 2 verbundenen Batteriezelle 1 bilden. Dabei können die Batteriezellen beispielsweise einen zumindest im Bereich ihres dem Träger 2 zugewandten Endabschnitts abisolierten Zellenmantel aufweisen, sodass die von den zweiten Kontaktfedern 9 umgriffenen Endabschnitte jeweils den negativen Kontakt bilden. Die zweiten Kontaktfedern 9 stehen dabei in elektrischem Kontakt mit einem in der Fig. 1 nicht näher dargestellten zweitem Leitblech als zweiten Strompfad 10, das auf der dem ersten Strompfad 8 gegenüberliegenden Unterseite des Trägers 2 angeordnet ist.

Der in Fig. 1 dargestellte Träger 2 weist zudem einen Trägerrahmen 11 auf. Je nach erforderlicher Größe bzw. Kapazität des Batteriemoduls können mehrere Träger 2 über an den Trägerrahmen 11 angeordnete und mit den beiden Stromleitpfaden 8 bzw. 10 elektrisch verbundene Anschlusskontakte 12 bzw. 13 zusammengeschaltet bzw. dort auch abgegriffen werden.

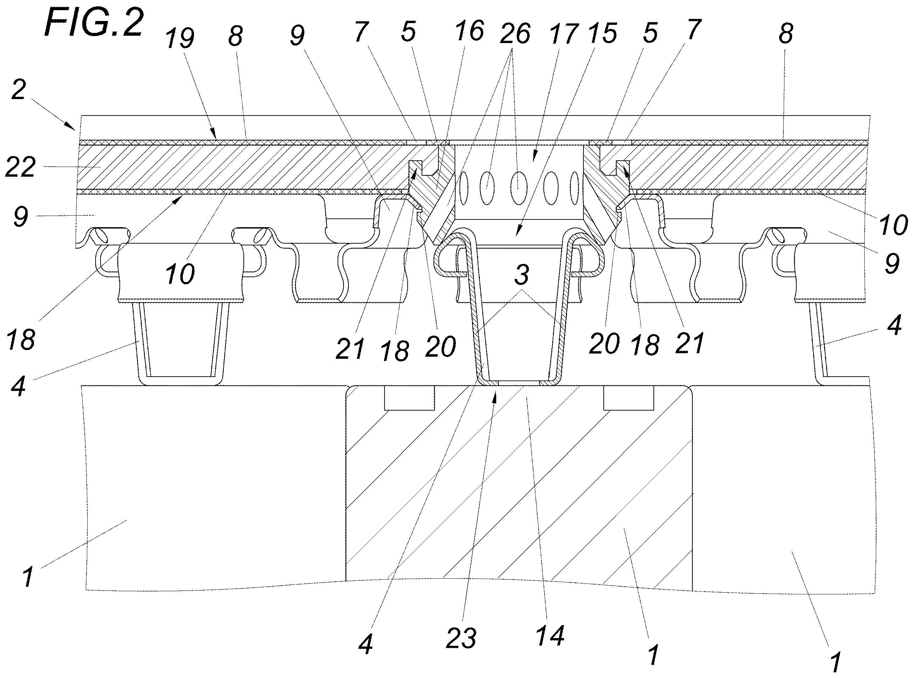

Fig. 2 zeigt eine Schnittansicht einer erfindungsgemäßen und in ein Batteriemodul gemäß Fig. 1 eingesetzten Kontaktierungsvorrichtung bei noch nicht verbundener Batteriezelle 1. Die erste Kontaktfeder 4 ist mit der Batteriezelle 1 zugfest verbunden. Dies kann beispielsweise über eine durch ein Schweißverfahren geschaffene Stoffschlussverbindung zwischen der ersten Kontaktfeder 4 und dem positiven Zellenpol 14 der Batteriezelle 1 erfolgen.

Die zweite Kontaktfeder 9 ist in einen, eine Aufnahme 15 für die erste Kontaktfeder 4 aufweisenden und in der gezeigten Ausführungsform rotationssymmetrisch ausgebildeten Isolationskörper 16 eingesetzt, der einen Führungskanal 17 für die erste Kontaktfeder 4 bildet. Die Aufnahme 15 ist dabei durch den Isolationskörper 16 von der zweiten Kontaktfeder 9 isoliert. Der Führungskanal 17 erstreckt sich in seiner Länge von einer ersten Außenfläche 18 zu einer gegenüberliegenden zweiten Außenfläche 19 des Trägers 2. Für den Fall, dass der Führungskanal 17, wie dies in der Fig. 2 ersichtlich ist, vom Isolationskörper 16 gebildet wird, kann der Führungskanal 17 selbstverständlich auch über die erste Außenfläche 18 hinausragen, wobei sich der Führungskanal 17 dabei dennoch von der ersten Außenfläche 18 zu der gegenüberliegenden zweiten Außenfläche 19 erstreckt. Zur mechanischen Verbindung des Isolationskörpers 16 mit der zweiten Kontaktfeder 9 greift diese mit ihren gegenüber der Längsachse des Führungskanals 17 geneigten Einsetzabschnitten 18 in eine umlaufende Rastnut 20 des Isolationskörpers 16 ein, die an der der Aufnahme 15 gegenüberliegenden Außenseite des Isolationskörpers 16 angeordnet ist. Der Isolationskörper 16 ist seinerseits in eine dafür vorgesehene Aussparung 21 einer Trägerplatte 22 des Trägers 2 formschlüssig eingesetzt und dadurch mit diesem mechanisch verbunden. Die an den beiden Außenflächen 19 bzw. 18 angeordneten Strompfade 8 bzw. 10 sind zudem über die Trägerplatte 22 elektrisch voneinander isoliert. Zufolge dieser Maßnahmen sind zur Vermeidung von Kurzschlüssen ausreichend hohe Luft- und Kriechstecken zwischen den jeweiligen Kontaktfedern 4 und 10 bzw. den als Leitblechen ausgebildeten Stromleitpfaden 8 und 10 gewährleistet.

Die zweite Kontaktfeder 9 weist zudem Kontaktabschnitte auf, die an die in die Rastnut 20 des Isolationskörpers 16 eingesetzten Einsetzabschnitte 18 anschließen und parallel zu dem als Leitblech ausgebildeten zweiten Strompfad 10 ausgerichtet sind und an diesen unter elektrischer Kontaktierung angedrückt sind. Dabei können jene Kontaktabschnitte auch stoffschlüssig mit dem zweiten Strompfad 10 verbunden sein.

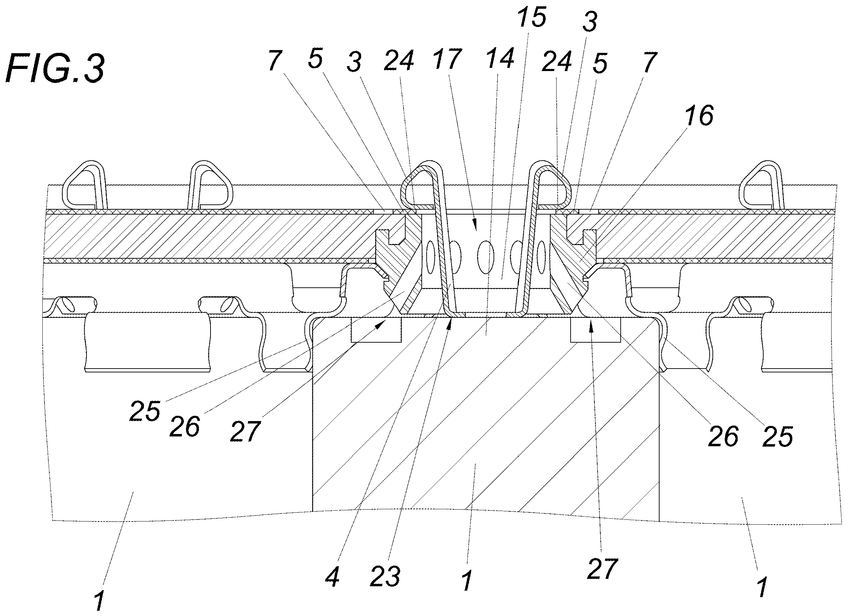

Wie aus der Fig. 3 hervorgeht, hintergreifen die Rastkörper 3 der ersten Kontaktfeder 4 den Führungskanal 17 austrittsseitig, nachdem die erste Kontaktfeder 4, die stoffschlüssig mit der Batteriezellen 1 verbunden und als V-förmig von einer Basis 23 aufragende Federzungen ausgebildet ist, unter Vorspannung in den Führungskanal 17 des Isolationskörpers 16 eingeführt wurde. Dabei liegen die Rastkörper 3 mit ihren elektrisch leitenden Abschnitten als elektrische Kontakte 24 an dem ringförmigen elektrischen Kontakt 5 der Rastaufnahme 6 auf. Der elektrische Kontakt 5 ist über Stromleitbrücken 7 als Schmelzsicherung mit dem als Leitblech ausgebildeten ersten Strompfad 8 verbunden.

In der Fig. 3 ist zudem zu erkennen, dass bei mit dem Träger 2 verbundener Batteriezelle 1 der dem Träger 2 zugewandte Endabschnitt der Batteriezelle 1 von den blütenförmig vorragenden, elektrisch leitenden Klemmabschnitten 25 der zweiten Kontaktfeder 9 kraftschlüssig umgriffen wird.

Um eine thermische Beanspruchung des Trägers 2 beim Ausgasen der Batteriezelle 1 im Fehlerfall zu reduzieren, weist der Isolationskörper 16 mehrere Heißgaskanäle 26 auf, die in gleichem Abstand zueinander umlaufseitig angeordnet sind und in einem Neigungswinkel von 30° gegenüber der Längsachse des Führungskanals 17 verlaufen. Die Heißgaskanäle 26 setzen an dem den positiven Zellenpol 14 ringförmig umschließenden Bereich 27 des Zellenmantels der Batteriezelle 1 an der Außenseite des Isolationskörpers 16 an und münden in die Aufnahme 15 bzw. den Führungskanal 17, sodass anfallendes Heißgas durch den Führungskanal 17 nach oben durch den Träger 2 abgeleitet werden kann.

## Patentansprüche

1. Kontaktierungsvorrichtung zum lösbaren elektrischen und mechanischen Verbinden einer Batteriezelle (1) mit einem, zwei voneinander elektrisch isolierte Strompfade (8, 10) aufweisenden Träger (2), wobei eine erste, mit der Batteriezelle (1) zugfest verbundene und den Träger (2) bei verbundener Batteriezelle (1) wenigstens teilweise durchsetzende Kontaktfeder (4) einen Rastkörper (3) bildet, der mit einer, einen elektrischen Kontakt (5) für den ersten Strompfad (8) aufweisenden Rastaufnahme (6) des Trägers (2) zusammenwirkt, und dass eine zweite Kontaktfeder (9) einen Anschlag für die mit dem Träger (2) verbundene Batteriezelle (1) bildet, **dadurch gekennzeichnet, dass** die zweite Kontaktfeder (9) einen Klemmabschnitt (25) zum umfangsseitigen Umgreifen eines Endabschnittes der Batteriezelle (1) aufweist.

2. Kontaktierungsvorrichtung nach Anspruch 1, **dadurch gekennzeichnet, dass** die erste Kontaktfeder (4) bei verbundener Batteriezelle (1) einen sich von einer einführseitigen ersten Außenfläche (18) zu einer gegenüberliegenden zweiten Außenfläche (19) des Trägers (2) erstreckenden Führungskanal (17) teilweise durchsetzt.

3. Kontaktierungsvorrichtung nach Anspruch 2, **dadurch gekennzeichnet, dass** die beiden Strompfade (8, 10) auf den gegenüberliegenden Außenflächen (18, 19) des Trägers (2) verlaufen, wobei bei verbundener Batteriezelle (1) der Rastkörper (3) der ersten Kontaktfeder (4) den Führungskanal (17) austrittsseitig hintergreift und mit seinem elektrischen Kontakt (24) auf dem der Einführseite gegenüberliegenden ersten Strompfad (8) aufliegt.

4. Kontaktierungsvorrichtung nach einem der Ansprüche 1 bis 3, **dadurch gekennzeichnet, dass** der elektrische Kontakt (5) der Rastaufnahme (6) für den ersten Strompfad (8) eine Stromleitbrücke (7) als Schmelzsicherung aufweist.

5. Kontaktierungsvorrichtung nach einem der Ansprüche 1 bis 4, **dadurch gekennzeichnet, dass** der Träger (2) eine Aussparung (21) für einen Isolationskörper (16) aufweist, der eine von der zweiten Kontaktfeder (9) isolierte Aufnahme (15) für die erste Kontaktfeder (4) bildet.

6. Kontaktierungsvorrichtung nach Anspruch 5, **dadurch gekennzeichnet, dass** der Isolationskörper (16) an seiner der Aufnahme (15) gegenüberliegenden Außenseite eine Rastnut (20) für die zweite Kontaktfeder (9) aufweist.

7. Kontaktierungsvorrichtung nach Anspruch 5 oder 6, **dadurch gekennzeichnet, dass** der Isolationskörper (16) Heißgaskanäle (26) aufweist, die von seiner Außenseite in die Aufnahme (15) für die erste Kontaktfeder (4) münden.

8. Kontaktierungsvorrichtung nach einem der Ansprüche 5 bis 7, **dadurch gekennzeichnet, dass** die Aufnahme (15) des Isolationskörpers (16) den Führungskanal (17) für die erste Kontaktfeder (4) bildet.

9. Verfahren zum Assemblieren eines Batteriemoduls mit Kontaktierungsvorrichtungen nach Anspruch 8, **dadurch gekennzeichnet, dass** zunächst die ersten Kontaktfedern (4) mit dem positiven Zellenpol (14) der Batteriezellen (1) stoffschlüssig verbunden und die zweiten Kontaktfedern (9) in die dafür vorgesehenen Rastnuten (20) der Isolationskörper (16) eingesetzt werden, wonach die Isolationskörper (16) mit den zweiten Kontaktfedern (9) in entsprechende Aussparungen (21) einer gemeinsamen Trägerplatte (22) eingesetzt und die ersten Kontaktfedern (4) soweit in die Führungskanäle (17) der Isolationskörper (16) eingeführt werden, dass die Rastkörper (3) der ersten Kontaktfedern (4) die Führungskanäle (17) austrittsseitig unter elektrischer Kontaktierung des ersten Strompfades (8) hintergreifen, und dass die Klemmabschnitte (25) der zweiten Kontaktfedern (9) die trägerseitigen Endabschnitte der Batteriezellen (1) umgreifen.

## Claims

1. Contacting device for releasably electrically and mechanically connecting a battery cell (1) to a carrier (2) having two current paths (8, 10) electrically insulated from one another, wherein a first contact spring (4), which is connected to the battery cell (1) in a manner resistant to tensile forces and, when the battery cell (1) is connected, extends at least partially through the carrier (2), forms a latching body (3) which cooperates with a latching receptacle (6) of the carrier (2) that has an electrical contact (5) for the first current path (8), and wherein a second contact spring (9) forms a stop for the battery cell (1) connected to the carrier (2), **characterized in that** the second contact spring (9) comprises a clamping portion (25) for circumferentially engaging around an end portion of the battery cell (1).

2. Contacting device according to claim 1, **characterized in that**, when the battery cell (1) is connected, the first contact spring (4) extends partially through a guide channel (17) extending from a first outer surface (18) on the insertion side to an opposite second outer surface (19) of the carrier (2).

3. Contacting device according to claim 2, **characterized in that** the two current paths (8, 10) extend on the opposite outer surfaces (18, 19) of the carrier (2), wherein, when the battery cell (1) is connected, the latching body (3) of the first contact spring (4) engages behind the guide channel (17) on the exit side and rests, by means of its electrical contact (24), on the first current path (8) opposite the insertion side.

4. Contacting device according to any one of claims 1 to 3, **characterized in that** the electrical contact (5) of the latching receptacle (6) for the first current path (8) comprises, as a fuse, a current-conducting bridge (7).

5. Contacting device according to any one of claims 1 to 4, **characterized in that** the carrier (2) comprises a recess (21) for an insulating body (16), which insulating body (16) forms a receptacle (15), insulated from the second contact spring (9), for the first contact spring (4).

6. Contacting device according to claim 5, **characterized in that** the insulating body (16) comprises, on its outer side opposite the receptacle (15), a latching groove (20) for the second contact spring (9).

7. Contacting device according to claim 5 or 6, **characterized in that** the insulating body (16) comprises hot-gas channels (26) which open from its outer side into the receptacle (15) for the first contact spring (4).

8. Contacting device according to any one of claims 5 to 7, **characterized in that** the receptacle (15) of the insulating body (16) forms the guide channel (17) for the first contact spring (4).

9. Method for assembling a battery module with contacting devices according to claim 8, **characterized in that** the first contact springs (4) are first materially bonded to the positive cell terminal (14) of the battery cells (1) and the second contact springs (9) are inserted into the latching grooves (20) provided therefor in the insulating bodies (16), whereupon the insulating bodies (16), with the second contact springs (9), are inserted into corresponding recesses (21) of a common carrier plate (22), and the first contact springs (4) are introduced into the guide channels (17) of the insulating bodies (16) to such an extent that the latching bodies (3) of the first contact springs (4) engage behind the guide channels (17) on the exit side while making electrical contact with the first current path (8), and **in that** the clamping portions (25) of the second contact springs (9) engage around the carrier-side end portions of the battery cells (1).

## Revendications

1. Dispositif de connexion destiné à relier électriquement et mécaniquement et de manière amovible une cellule de batterie (1) à un support (2) comportant deux chemins de courant (8, 10) isolés électriquement l'un de l'autre, dans lequel un premier ressort de contact (4), relié de manière résistante à la traction à la cellule de batterie (1) et traversant au moins partiellement le support (2) lorsque la cellule de batterie (1) est connectée, forme un corps d'encliquetage (3) qui coopère avec un logement d'encliquetage (6) comportant un contact électrique (5) pour le premier circuit électrique (8) du support (2), et dans lequel un deuxième ressort de contact (9) forme une butée pour la cellule de batterie (1) reliée au support (2), **caractérisé en ce que** le deuxième ressort de contact (9) comporte une partie de serrage (25) destinée à enserrer circonférentiellement une partie d'extrémité de la cellule de batterie (1).

2. Dispositif de contact selon la revendication 1, **caractérisé en ce que**, lorsque la cellule de batterie (1) est connectée, le premier ressort de contact (4) traverse partiellement un canal de guidage (17) s'étendant d'une première surface extérieure (18) côté insertion vers une deuxième surface extérieure (19) opposée du support (2).

3. Dispositif de contact selon la revendication 2, **caractérisé en ce que** les deux chemins de courant (8, 10) s'étendent sur les surfaces extérieures opposées (18, 19) du support (2), le corps d'encliquetage (3) du premier ressort de contact (4) s'engageant, lorsque la cellule de batterie (1) est connectée, derrière le canal de guidage (17) du côté de la sortie et reposant avec son contact électrique (24) sur le premier chemin de courant (8) opposé au côté d'insertion.

4. Dispositif de connexion selon l'une des revendications 1 à 3, **caractérisé en ce que** le contact électrique (5) du logement d'encliquetage (6) pour le premier chemin de courant (8) comporte un pont conducteur de courant (7) faisant office de fusible.

5. Dispositif de contact selon l'une des revendications 1 à 4, **caractérisé en ce que** le support (2) comporte un évidement (21) destiné à un corps isolant (16) qui forme un logement (15) pour le premier ressort de contact (4), isolé du deuxième ressort de contact (9).

6. Dispositif de contact selon la revendication 5, **caractérisé en ce que** le corps isolant (16) comporte, sur sa face extérieure opposée au logement (15), une rainure d'encliquetage (20) destinée au deuxième ressort de contact (9).

7. Dispositif de contact selon la revendication 5 ou 6, **caractérisé en ce que** le corps isolant (16) comporte des canaux de gaz chaud (26) qui débouchent depuis sa face extérieure dans le logement (15) destiné au premier ressort de contact (4).

8. Dispositif de connexion selon l'une des revendications 5 à 7, **caractérisé en ce que** le logement (15) du corps isolant (16) forme le canal de guidage (17) pour le premier ressort de contact (4).

9. Procédé d'assemblage d'un module de batterie avec des dispositifs de contact selon la revendication 8, **caractérisé en ce que**, dans un premier temps, les premiers ressorts de contact (4) sont reliés par liaison par adhérence à la borne positive (14) des cellules de batterie (1) et les seconds ressorts de contact (9) sont insérés dans les rainures d'encliquetage (20) prévues à cet effet dans les corps isolants (16), après quoi les corps isolants (16) avec les deuxièmes ressorts de contact (9) sont insérés dans des évidements correspondants (21) d'une plaque de support commune (22) et les premiers ressorts de contact (4) sont introduits dans les canaux de guidage (17) des corps isolants (16) jusqu'à ce que les éléments d'encliquetage (3) des premiers ressorts de contact (4) s'engagent derrière les canaux de guidage (17) du côté de la sortie, tout en établissant un contact électrique avec le premier chemin de courant (8), et que les parties de serrage (25) des seconds ressorts de contact (9) enserrent les parties d'extrémité côté support des cellules de batterie (1).
